# EUROPEAN PATENT SPECIFICATION

(11) **EP 1 006 811 B1**
(45) Date of publication and mention of the grant of the patent: **14.09.2005**
(21) Application number: 98942665.5
(22) Date of filing: 23.07.1998
(51) Int. Cl.: A23L 1/19, A23C 19/093, A23C 9/13, A21D 13/08

(54) **CREAM-BASED FOOD COMPOSITION AND PROCESS FOR THE MANUFACTURE THEREOF**
NAHRUNGSMITTEL AUF BASIS VON RAHM UND VERFAHREN ZU DESSEN HERSTELLUNG
COMPOSITION ALIMENTAIRE A BASE DE CREME ET PROCEDE DE FABRICATION

(30) Priority: 28.08.1997 EP 97202631
(43) Date of publication of application: 14.06.2000
(73) Proprietor: SOCIETE DES PRODUITS NESTLE S.A., 1800 Vevey (CH)
(72) Inventor: BAENSCH, Johannes, F-14130 Le Breuil-en-Auge (FR); GAUGAZ, Marlène, CH-1802 Corseaux (CH); LENEUF, Dominique, CH-1800 Vevey (CH); REIMERDES, Ernst, Hartmut, CH-1096 Cully/Villette (CH)
(74) Representative: Thomas, Alain
(86) International application number: PCT/EP1998/004930
(87) International publication number: WO 1999/011147

(56) References cited:
- EP-A- 0 256 561
- EP-A- 0 440 203
- EP-A- 0 607 471
- EP-A- 0 666 031
- EP-A- 0 818 149
- DE-A- 4 032 698
- DE-A- 19 615 369
- US-A- 5 573 793

## Description

The subject of the present invention is a process for the preparation of a cream and the use of this cream in the manufacture of a food composition.

The preparation of cream-based food compositions is known.

EP 0714608 describes in particular a process for the manufacture of appetizers from a mixture containing in particular soft white cheese which is pasteurized and cooled to 10°C before being extruded and then frozen, so as to be able to be cut into portions which are then coated with a fat-based topping.

Furthermore, EP 0687420 describes a process for the manufacture of a biscuit coated and filled with a cream containing living lactic acid bacteria, exhibiting a water activity (Aw) of 0.75-0.86 and comprising a sufficient amount of fatty substance so that it is in the form of a water-in-oil emulsion.

EP0818149 discloses an aerated food composition constituted by an oil-in-water emulsion comprising 20-45% fats, milk proteins, possibly sugars, and 20-38% water, having an acid pH of from 3.5 to 6 and obtained by emulsifying a mixture of an aqueous phase base on fresh cheese, yogourt and/or sour cream and a fat phase comprising butter or vegetable fat, pasteurising the emulsion and foaming.

The aim of the present invention is to provide a simple and rapid process which makes it possible to produce a cream with a creamy texture and with a f resh taste..

To this end, in the process according to the present invention, a mixture containing 10-20% of milk derivatives, 8-30% of sugars, 10-60% of fermented dairy product, 0-25% of sour cream or of dairy cream containing 25-45% of fatty substance, 0-35% of texturizing agent, 0-20% of aromatic product and 0-0.5% of salt is prepared with stirring, this mixture is heat treated at 60-115°C for 7 s to 5 min, the temperature of the mixture is adjusted to 15-40°C, and 10-45% of molten fatty substance, with respect to the total weight of the mixture, is added to the mixture with stirring, so as to obtain a homogeneous cream which exhibits an Aw around about 0.80-0-91.

It was surprisingly found that the process according to the present invention makes it possible to produce a cream which retains a creamy texture and a fresh taste after 45 days at refrigerator temperature. The cream according to the present invention has the advantage of being able to be consumed directly after storage at refrigerator temperature or a few hours after having been exposed to room temperature.

In the continuation of the description, the expression "milk derivative" will be employed to denote powdered skimmed milk, powdered unskimmed milk or sweetened evaporated milk, for example.

In the continuation of the description, the term "biscuit" will be employed to denote any dough-based preparation, such as sponge cake, pound cake, gingerbread, brioche rolls or Viennese bread and buns, for example.

In order to make use of the present process, a mixture containing 10-20% of milk derivative, 8-30% of sugars, 10-60%.of fermented dairy product, 0-25% of sour cream or of dairy cream containing 25-45% of fatty substance, 0-35% of texturizing agent, 0-20% of aromatic product and 0-0.5% of salt is thus prepared with stirring in a turbomixer. The mixture according to the present invention can also contain a supplement of inorganic salts, fonctional nutritional compounds and/or a supplement of vitamins, for example.

It is possible to use a milk derivative, such as powdered unskimmed milk and/or powdered skimmed milk and/or sweetened evaporated milk, for example.

It is possible to use, as sugars, sucrose, invert sugar syrup, glucose syrup and/or honey, for example.

It is possible to use, as fermented dairy product, fermented milk and/or yogurt and/or cream cheese and/or powdered fermented milk diluted in milk or in water and/or powdered yogurt diluted in water or in milk and/or concentrated yogurt and/or concentrated cream cheese and/or powdered cream cheese or quark diluted in water orin milk, for example.

It is possible to use sour cream or dairy cream containing 25-45% of fatty substance, so as to increase the organoleptic qualities of the mixture, in particular its smoothness, for example.

Maltodextrin and/or fermented cereal product can be used as texturizing agent, so as to give body to the mixture while limiting its sweet flavour, for example.

It is possible to use, as aromatic product, honey, cocoa, coffee, caramel, hazelnuts, almonds, vanilla or whole fruits and/or fruit chunks and/or fruit syrup and/or concentrated fruit juices, for example.

It is possible to use cocoa, coffee, hazelnuts, vanilla or fruit flavors in the solid form, in particular in powdered form, or in liquid form, for example.

It is possible in particular to use lemon, cherries, strawberries, raspberries, blackberries, apricots or peaches as whole fruits and/or as fruit chunks and/or as fruit syrup. The whole fruits and/or fruit chunks can be candied or uncandied fruits, semi-candied fruits and/or freeze-dried fruits, for example.

Before the heat treatment, the value of the pH of the mixture can be adjusted to 4-6, depending on the acidity of the aromatic product contained in the mixture, for example. In the case where the aromatic product is acidic, the pH of the mixture is very precisely adjusted, so as not to destroy the smooth structure of the mixture. It can in particular be adjusted by adding 0.1-2% of lactic acid or 0.1-2% of citric acid to the mixture, for example.

The mixture is then thus heat treated at 60-115°C for 7 sec to 5 min, so as to pasteurize it.

If it is desired to set the mixture aside, before adding the fatty substance thereto, it is possible, if appropriate, to cool it, so as to store it at 8-20°C and to maintain it thus under good hygienic conditions, for example.

The temperature of the mixture is thus subsequently adjusted to 15-40°C.

It is possible to incorporate, in the mixture, 0.02-0.5% of crystalline lactose per 100 g of mixture, after having adjusted the temperature of the mixture to 15-40°C.

Living lactic acid bacteria can then be added to the mixture at a concentration of 10⁸-10¹¹ per gram of mixture, after having adjusted the temperature of the mixture to 15-40°C. The living lactic acid bacteria can be added in dried form, in the form of a fresh or frozen concentrated culture or in the form of a fermented dairy product, for example.

10-45% of molten fatty substance, with respect to the total weight of the mixture, is then added to the mixture with stirring, so as to obtain a homogeneous cream which exhibits an Aw around about 0.80-0.91. The fatty substance can be vegetable fat, the melting point of which is greater than 30°C, or a mixture of such vegetable fats and of animal fat, in particular butter, for example.

It is then possible to aerate the cream, so as to make it lighter. It is possible in particular to aerate it by incorporating therein, by continuous injection, in particular 25 to 150 ml of an inert gas, such as nitrogen or other gases, such as air or carbon dioxide, per 100 g of cream, for example.

Another subject of the present invention is a food composition comprising the cream, obtained by the implementation of the process, cooled and then deposited on at least one layer of biscuit, preferably between two layers of biscuit.

The food composition according to the present invention preferably exhibits an Aw of 0.75-0.88. Moreover, this food composition can be stored for at least 45 days at refrigerator temperature, that is to say at 4-8°C. The food composition according to the present invention can be consumed immediately after storage at refrigerator temperature or a few hours, in particular 3-12 h, after having been removed from a refrigeration area and having been left at room temperature.

The food composition can be coated entirely or partially with chocolate, a chocolate substitute or an icing of fondant type, for example.

Moreover, the food composition according to the present invention can contain, in the cream or in the biscuit, lactic acid bacteria at a concentration of 10⁴-10⁹ per gram of the food composition.

The preparation process and the food composition according to the present invention are described in more detail in the examples below where the percentages are given by weight, except when otherwise indicated.

### Example 1

A food composition with a strawberry aroma is prepared.

To do this, a mixture containing 17% of powdered skimmed milk, 14% of sucrose, 2.3% of glucose syrup, 20% of cream cheese, 11% of yogurt, 5% of dairy cream containing 35% of fatty substance, 20% of maltodextrin, 10% of strawberry pulp and 0.7% of powdered strawberry essence is prepared with stirring in a turbomixer.

The pH of the mixture is adjusted to 4.4 by adding 1.5% of lactic acid thereto.

The viscosity of the mixture is measured using a Brookfield viscometer sold by the Company Brookfield Engineering Laboratories Inc., Stoughton, USA. The mixture exhibits a viscosity of 7600 cps (7600 mPa·s) at 29°C.

The mixture is then heat treated at 80°C for 3 min.

Its temperature is then adjusted to 32°C before incorporating, in the mixture, 0.04% of crystalline lactose per 100 g of mixture.

20% of molten fatty substance, with respect to the total, weight of the mixture, is then added with stirring, so as to obtain a homogeneous cream.

A homogeneous cream is thus obtained which exhibits an Aw of 0.91 and a pH value of 4.3.
Before depositing this homogeneous cream between the two layers of biscuit, it is cooled and then aerated by incorporating therein 70 ml of nitrogen per 100 g of cream.

20 g of this cream are then deposited, using a depositing nozzle, between two layers of biscuit, each of 6 g.

A food composition is thus obtained with a strawberry aroma which has a creamy texture and which exhibits a fresh taste.

This composition is wrapped in a hermetically closed plastic sachet and is then stored at refrigerator temperature. It can be stored at refrigerator temperature for 8 weeks.

### Example 2

A food composition with a cocoa aroma is prepared.

To do this, a mixture containing 15% of powdered skimmed milk, 18% of sucrose, 4% of invert sugar syrup, 19% of cream cheese, 14% of yogurt, 6% of dairy cream containing 35% of fatty substance, 19% of maltodextrin and 5% of powdered cocoa is prepared with stirring in a turbomixer.

The viscosity of the mixture is measured using a Brookfield viscometer sold by the Company Brookfield Engineering Laboratories Inc., Stoughton, USA. The mixture exhibits a viscosity of 12,000 cps (12,000 mPa·s) at 33°C with an RV5 unit at a rotational speed of 10 rpm.

The mixture is then heat treated at 80°C for 3 min.

Its temperature is then adjusted to 32°C before incorporating, in the mixture, 0.04% of crystalline lactose per 100 g of mixture.

25% of molten fatty substance, with respect to the total weight of the mixture, is thenadded with stirring, so as to obtain a homogeneous cream..

A homogeneous cream is thus obtained which exhibits an Aw of 0.89 and a pH value of 5.8.

Before depositing this homogeneous cream between two layers of biscuit, it is cooled and then aerated by incorporating therein 60 ml of nitrogen per 100 g of cream.

14 g of this cream are then deposited, using a depositing nozzle, between two layers of biscuit, each of 7 g.

A food composition is thus obtained with a cocoa aroma which has a creamy texture and which exhibits a fresh taste.

This composition is wrapped in a hermetically closed plastic sachet and is then stored at refrigerator temperature.

### Example 3

A food composition with a blueberry aroma is prepared.

To do this, a concentrated yoghurt with 76% milk, 24% skimmed milk powder and yoghurt ferments is prepared. In this concentrated yoghurt, living lactic acid bacteria are at a concentration of 5*10⁸ per gram of the concentrated yoghurt.

A mixture containing 19% of milk, 14% of skimmed milk powder, 17.3% of sugar, 14% of inverted sugar, 20% of maltodextrine, 13% of blueberry pulp, 0.83% of powdered blueberry essence, 1.7% of lactic acid, 0.17% of salt is prepared with stirring in a turbomixer.

The mixture is then pasteurided before adding 0.03% of microcrystalline lactose.

Then 33% of the concentrated yoghurt, with respect to the total weight of the mixture, is added with stirring to the mixture.

33% of molten fatty substance, with respect to the total weight of the mixture, is then added with stirring, so as to obtain a homogeneous cream..

A homogeneous cream is thus obtained which exhibits an Aw of 0.91, a pH value of 4.5 and a specific gravity of about 650 g/l. This homogeneous cream contains living lactic acid bacteria at a concentration of 10⁸ per gram of the cream.

Before depositing this homogeneous cream between two layers of biscuit, it is cooled and then aerated by incorporating therein 60 ml of nitrogen per 100 g of cream.

20 g of cream is depositted between two layers of 10 g biscuit each.

The food composition has an Aw of 0.88 and contains living lactic acid bacteria at a concentration of 5*10⁷ per gram of the food composition. After keeping 45 days chilled the food composition still contains living lactic acid bacteria at a concentration over of 10⁶ per gram of the food composition.

## Claims

1. Process for the preparation of a cream, in which:
- a mixture containing 10-20% of milk derivatives, 8-30% of sugars, 10-60% of fermented dairy product, 0-25% of sour cream or of dairy cream containing 25-45% of fatty substance, 0-35% of texturizing agent, 0-20% of aromatic product and 0-0.5% of salt is prepared with stirring,
- this mixture is heat treated at 60-115°C for 7 sec to 5 min,
- the temperature of the mixture is adjusted to 15-40°C, optionally 0.02-0.5% of crystalline lactose per 100g of mixture is added to the mixture and 10-45% of molten fatty substance, with respect to the total weight of the mixture, is added to the mixture with stirring, so as to obtain a homogeneous cream which exhibits an Aw of 0.80-0.91.

2. Process according to Claim 1, in which the aromatic product is honey, cocoa, coffee, caramel, hazel-nuts, almonds, vanilla or fruit chunks and/or whole fruits and/or fruit syrups and/or concentrated fruit juices.

3. Process according to Claim 1, in which the value of the pH of the mixture is adjusted to 4-6, before the mixture is heat treated.

4. Process according to Claim 1, in which living lactic acid bacteria are added to the mixture at a concentration of 10⁸-10¹¹ per gram of the mixture, after having adjusted the temperature of the mixture to 15-40°C.

5. Process according to Claim 1, in which the homogeneous cream is aerated.

6. Food composition comprising the cream obtainable by the implementation of the process according to one of Claims 1 to 5 wherein during said implementation lactose is added according to claim 1 and wherein the cream is deposited on at least one layer of biscuit.

7. Food composition according to Claim 6, comprising the cream deposited between two layers of biscuit.

## Patentansprüche

1. Verfahren zur Herstellung einer Creme, bei dem
- eine Mischung, die 10 bis 20 % Milchderivat, 8 bis 30 % Zucker, 10 bis 60 % fermentiertes Molkereiprodukt, 0 bis 25 % Sauerrahm oder Sahne, die 25 bis 45 % Fettanteil enthalten, 0 bis 35 % Texturisiermittel, 0 bis 20 % aromatisches Produkt und 0 bis 0,5 % Salz enthält, unter Rühren hergestellt wird,
- diese Mischung bei 60 bis 115°C für 7 Sekunden bis 5 Minuten wärmebehandelt wird,
- die Temperatur der Mischung auf 15 bis 40°C eingestellt wird, wahlweise zu der Mischung 0,02 bis 0,5 % kristalline Lactose pro 100 g der Mischung zugesetzt werden, und 10 bis 45 % geschmolzene Fettsubstanz, bezogen auf das Gesamtgewicht der Mischung, zu der Mischung unter Rühren zugesetzt werden, um auf diese Weise eine homogene Creme zu erhalten, die einen Aw-Wert von 0,80 bis 0,91 aufweist.

2. Verfahren nach Anspruch 1, wobei das aromatische Produkt Honig, Kakao, Kaffee, Karamel, Haselnüsse, Mandeln, Vanille oder Fruchtstücke und/oder ganze Früchte und/oder Fruchtsirupe und/oder konzentrierte Fruchtsäfte sind.

3. Verfahren nach Anspruch 1, wobei der Wert des pH der Mischung auf 4 bis 6 eingestellt wird, bevor die Mischung wärmebehandelt wird.

4. Verfahren nach Anspruch 1, wobei der Mischung in einer Konzentration von 10⁸ bis 10¹¹ pro g der Mischung lebende Milchsäurebakterien zugesetzt werden, nachdem die Temperatur der Mischung auf 15 bis 40°C eingestellt wurde.

5. Verfahren nach Anspruch 1, wobei die homogene Creme belüftet wird.

6. Nahrungsmittelzusammensetzung, die die Creme umfaßt, die durch die Anwendung des Verfahrens nach irgendeinem der Ansprüche 1 bis 5 erhältlich ist, wobei während der genannten Anwendung Lactose gemäß Anspruch 1 zugesetzt wird, und wobei die Creme auf wenigstens eine Gebäckschicht aufgebracht wird.

7. Nahrungsmittelzusammensetzung nach Anspruch 6, die die Creme zwischen zwei Gebäckschichten enthält.

## Revendications

1. Un procédé pour la préparation d'une crème, dans lequel :
- un mélange, contenant 10 à 20% de dérivés de lait, 8 à 30% de sucres, 10 à 60% de produits laitiers fermentés, 0 à 25% de crème aigre ou de crème laitière contenant 25 à 45% de matière grasse, 0 à 35% d'agent de texture, 0 à 20% d'agent aromatisant et 0 à 0,5% de sel, est préparé sous agitation,
- ce mélange est traité par la chaleur à une température comprise entre 60 et 115°C pendant une durée de 7 secondes à 5 minutes,
- la température du mélange est ajustée entre 15 et 40°C, facultativement, 0,02 à 0,5% de lactose cristallin est ajouté au mélange pour 100 g de mélange, et 10 à 45% de matière grasse fondue, par rapport au poids total du mélange, sont ajoutés au mélange sous agitation de façon à obtenir une crème homogène qui présente une Aw (activité de l'eau) de 0,8 à 0,91.

2. Le procédé selon la revendication 1, dans lequel l'agent aromatisant est du miel, du cacao, du café, du caramel, des noisettes, des amandes, de la vanille ou des morceaux de fruits et/ou des fruits entiers et/ou des sirops de fruit et/ou des jus de fruit concentré.

3. Le procédé selon la revendication 1, dans lequel la valeur du pH du mélange est ajustée entre 4 et 6, avant que le mélange ne soit traité par la chaleur.

4. Le procédé selon la revendication 1, dans lequel des bactéries productrices d'acide lactique vivantes sont ajoutées au mélange à une concentration de 10⁸ à 10¹¹ bactéries par gramme de mélange, une fois la température du mélange ajustée entre 15 et 40°C.

5. Le procédé selon la revendication 1, dans lequel la crème homogène est aérée.

6. La composition alimentaire comprenant la crème qui peut être obtenue grâce à la mise en oeuvre du procédé selon l'une des revendications 1 à 5, où pendant ladite mise en oeuvre, du lactose est ajouté selon la revendication 1, et où la crème est déposée sur au moins une couche de biscuit.

7. La composition alimentaire selon la revendication 6, comprenant la crème déposée entre deux couches de biscuit.
